# DEMANDE DE BREVET EUROPEEN

(11) **EP 4 364 904 A1**
(43) Date de publication de la demande: **08.05.2024**
(21) Numéro de dépôt: 23206669.6
(22) Date de dépôt: 30.10.2023
(51) Int. Cl.: B25J 9/16, B25J 5/00, G05D 1/00

(54) **DISPOSITIF DE DÉTECTION DE SURVITESSE**

(30) Priorité: 04.11.2022 FR 2211515
(71) Demandeur: Aldebaran, 75015 Paris (FR)
(72) Inventeur: MONACI, Alexis, 75015 PARIS (FR); QUERIN, Guillaume, 75015 PARIS (FR); BRUNEL, Cédric, 75015 PARIS (FR); ROCHAIS, Florent, 75015 PARIS (FR); LAZAREFF, Alexandre, 75015 PARIS (FR)
(74) Mandataire: Atout PI Laplace

(57) **Abrégé**

L'invention concerne un véhicule (1) comprenant un châssis (10) et un ensemble moteur roue (12) comprenant une roue motrice (120) et un moteur électrique (122) entraînant, le véhicule (1) comprenant un dispositif de détection de survitesse (2), le dispositif de détection de survitesse (2) comprenant un premier capteur (20), le premier capteur (20) étant configuré pour mesurer une vitesse de rotation,
le dispositif de détection de survitesse (2) comprenant un dispositif de référence de vitesse (22) pour établir une vitesse de rotation maximale, le dispositif de référence (22) comprenant un capteur optique (220) pour déterminer un environnement proche, la vitesse de rotation maximale étant fonction de l'environnement proche, d'un seuil de vitesse fonctionnel prédéfini et d'un sens de rotation,
le dispositif de détection de survitesse (2) comprenant un comparateur (24) entre la vitesse de rotation et la vitesse de rotation maximale, le comparateur (24) étant configuré pour arrêter la rotation de la roue motrice (120) si la vitesse de est supérieure à la vitesse de rotation maximale,

le premier capteur de survitesse (20) comprenant un convertisseur de signal (200) configuré pour convertir une fréquence de bascule du premier capteur de survitesse (20) en une tension analogique.

## Description

L'invention concerne le domaine des robots se déplaçant de manière autonome et, plus précisément, les robots mobiles autonomes aptes à transporter des marchandises ou des charges sur une zone de déplacement prédéfinie.

Les robots mobiles autonomes permettant le déplacement d'objets sont spécifiquement conçus pour une conduite autonome et sûre.

Le système de sécurité de tels robots mobiles autonomes comprend des moyens pour détecter des obstacles dans une zone de déplacement prédéfinie autour du robot mobile autonome et des moyens pour amener le robot mobile autonome à un arrêt de manière sûre avant d'entrer en collision avec tout obstacle détecté dans une zone de déplacement définie.

Une solution connue pour détecter des obstacles tout autour du robot mobile autonome est de monter deux scanneurs laser opposés l'un à l'autre aux coins d'un robot mobile typiquement rectangulaire. Chaque scanner couvre généralement un champ de vision de 270°, c'est-à-dire d'un côté du robot mobile à un autre côté pour un coin correspondant. Ainsi, les deux scanners peuvent couvrir une zone protectrice autour du robot autonome mobile.

De manière connue, un tel type de robot autonome mobile peut également comprendre d'autres types de capteurs permettant par exemple de mesurer la vitesse du robot autonome mobile à tout instant.

Il est alors possible de pouvoir détecter, à partir des données des scanners et/ou des capteurs une potentielle situation de survitesse du robot mobile autonome qui se traduit par une situation pendant laquelle le robot mobile autonome se déplace selon une vitesse pouvant être qualifiée d'excessive notamment par rapport à sa zone de déplacement et par rapport à son environnement proche. C'est notamment le cas lorsque le robot mobile autonome se déplace à proximité d'obstacles, ce dernier doit alors adapter sa vitesse et son déplacement par rapport à son environnement proche et à ces obstacles.

Tous ces capteurs et scanners sont généralement connectés à un contrôleur numérique qui analyse les données numériques de vitesse et de présence d'obstacle fournies par les différents capteurs et/ou scanners afin de contrôler les roues motrices du robot autonome mobile. Le contrôleur numérique adapte ainsi la vitesse et les trajectoires du robot mobile autonome en temps réel par rapport à l'environnement proche du robot et par rapport au danger immédiat que peuvent représenter les obstacles identifiés par les capteurs ou par les scanners.

Cependant, l'utilisation d'un tel contrôleur numérique et de tels capteurs numérique présente de nombreux inconvénients. En effet, l'utilisation d'un contrôleur numérique ou d'un encodeur numérique génère de la complexité dans l'architecture du robot mobile autonome du fait notamment de l'utilisation de moyens numériques. Outre les coûts importants d'une telle architecture, sa complexité peut entrainer des durées de réaction importantes incompatibles avec la sécurité du robot. De plus, en termes de sécurité liée à l'utilisation de tels moyens numériques pour obtenir un contrôle du mouvement et du freinage du robot autonome mobile, un contrôleur numérique présente également l'inconvénient de devoir respecter des normes de sécurité. La qualification vis-à-vis de ces normes peut être difficile à obtenir.

Afin d'éviter d'utiliser un architecture de type logicielle citée précédemment, il peut être envisagé de s'appuyer exclusivement sur une architecture matérielle mettant en oeuvre des composants logiques et analogiques câblés afin d'assurer la gestion de la vitesse du robot mobile dans sa zone de déplacement. En effet, la mise en oeuvre d'une architecture matérielle présente l'intérêt de répondre à des normes de sécurité différentes, moins contraignantes, en comparaison d'une architecture de type logicielle.

Ainsi, l'invention vise à pallier tout ou partie des problèmes cités plus haut en proposant un dispositif de détection d'une survitesse du robot mobile autonome fonctionnant exclusivement selon une logique de type matérielle et nécessitant uniquement l'utilisation d'un capteur simple positionné dans une roue motrice du robot mobile autonome ou au niveau d'un arbre entrainé par la roue et d'un capteur lidar permettant de détecter les obstacles et l'environnement proche du robot mobile autonome. Ce dispositif de détection de survitesse fonctionnant uniquement selon une architecture de type matérielle présente ainsi l'avantage d'être plus simple qu'une architecture de type logicielle, tout en répondant parfaitement aux normes de sécurité s'appliquant à ce type de système. L'invention présente également l'avantage de mettre en oeuvre un dispositif logique indépendant du contrôle moteur, ce qui assure une meilleure sécurité du véhicule.

A cet effet, l'invention a pour objet un véhicule configuré pour se mouvoir dans une zone de déplacement, le véhicule comprenant un châssis et un ensemble moteur roue comprenant au moins une roue motrice et un moteur électrique entrainant en rotation la roue motrice, le véhicule comprenant un dispositif de détection de survitesse de la roue motrice, le dispositif de détection de survitesse comprenant un premier capteur de survitesse, le premier capteur de survitesse étant configuré pour mesurer une vitesse de rotation de la roue motrice,
le dispositif de détection de survitesse comprenant un dispositif de référence de vitesse configuré pour établir une vitesse de rotation maximale de la roue motrice, le dispositif de référence de vitesse comprenant un capteur optique configuré pour déterminer un environnement proche de la roue motrice, le capteur optique étant disposé contre le châssis, la vitesse de rotation maximale étant au moins fonction de l'environnement proche, d'un seuil de vitesse fonctionnel prédéfini et d'un sens de rotation de la roue motrice,
le dispositif de détection de survitesse comprenant un comparateur de vitesse entre la vitesse de rotation de la roue motrice et la vitesse de rotation maximale de la roue motrice, le comparateur de vitesse étant configuré pour arrêter la rotation de la roue motrice si la vitesse de rotation de la roue motrice est supérieure à la vitesse de rotation maximale de la roue motrice,
le premier capteur de survitesse comprenant un convertisseur de signal configuré pour convertir une fréquence de bascule du premier capteur de survitesse en une tension analogique.

Selon un aspect de l'invention, le premier capteur de survitesse comprend un élément fixe positionné dans de la roue motrice et au moins un élément mobile positionné selon une extrémité radiale de la roue mobile par rapport à l'axe de rotation.

Selon un aspect de l'invention, le premier capteur de survitesse comprend un filtre disposé entre le convertisseur de signal et le comparateur de vitesse.

Selon un aspect de l'invention, le capteur optique est un capteur lidar.

Selon un aspect de l'invention, le capteur lidar est configuré pour générer une première cartographie de l'environnement proche, le capteur lidar comprend une deuxième entrée de programmation configuré pour programmer une zone d'attention du véhicule dans la zone de déplacement.

Selon un aspect de l'invention, le dispositif de détection de survitesse comprend un deuxième capteur de survitesse et disposé selon un angle prédéfinie par rapport au premier capteur de survitesse, le deuxième capteur de survitesse étant configuré pour mesurer une vitesse de rotation de la roue motrice.

Selon un aspect de l'invention, le premier capteur de survitesse et le deuxième capteur de survitesse sont des capteurs effet hall ou des capteurs rotatifs ou des capteurs optiques.

Selon un aspect de l'invention, le dispositif de détection de survitesse comprend un troisième capteur de survitesse et disposé selon un angle prédéfinie par rapport au premier capteur de survitesse et par rapport au deuxième capteur de survitesse, le troisième capteur de survitesse étant configuré pour mesurer une vitesse de rotation de la roue motrice.

Selon un aspect de l'invention, le dispositif de détection de survitesse comprend un détecteur de défaut de fonctionnement généralisé du premier capteur de survitesse, du deuxième capteur de survitesse et du troisième capteur de survitesse, le détecteur de défaut de fonctionnement généralisé étant configuré pour détecter un défaut de fonctionnement simultanée du premier capteur de survitesse et du deuxième capteur de survitesse ou du deuxième capteur de survitesse et du troisième capteur de survitesse ou du premier capteur de survitesse et du troisième capteur de survitesse ou encore du premier capteur de survitesse, du deuxième capteur de survitesse et du troisième capteur de survitesse.

Selon un aspect de l'invention, le moteur électrique est incorporé dans la roue motrice.

L'invention sera mieux comprise et d'autres avantages apparaîtront à la lecture de la description détaillée d'un mode de réalisation donné à titre d'exemple, description illustrée par le dessin joint dans lequel :
[Fig.1] la figure 1 représente une vue schématique d'un véhicule autonome comprenant un dispositif de détection de survitesse du véhicule selon l'invention ;
[Fig.2] la figure 2 représente une vue schématique du véhicule autonome selon un deuxième mode de configuration ;
[Fig.3] la figure 3 représente une vue schématique du véhicule autonome de la figure 1 comprenant deux capteurs de survitesse ;
[Fig.4] la figure 4 représente une vue schématique du véhicule autonome comprenant un détecteur de défaut de fonctionnement généralisé selon l'invention ;
[Fig.5] la figure 5 représente une vue schématique du véhicule autonome comprenant une configuration préférentielle du dispositif de détection de survitesse selon l'invention.

Par souci de clarté, les mêmes éléments porteront les mêmes repères dans les différentes figures.

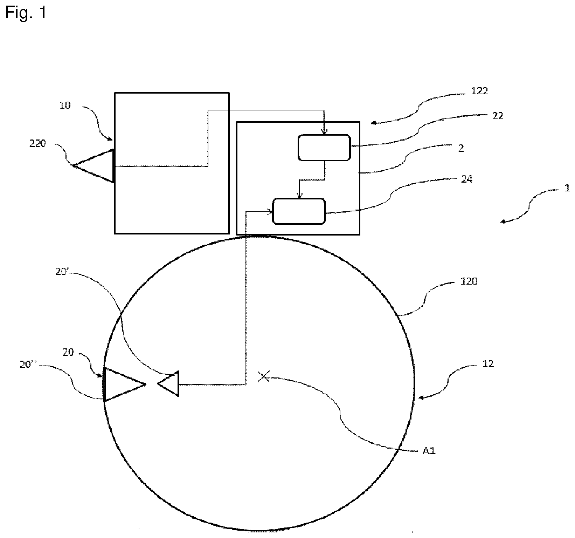

La figure 1 représente une vue schématique d'un véhicule 1 configuré pour se mouvoir dans une zone de déplacement. Le véhicule 1 peut être interprété comme tout véhicule terrestre apte à se déplacer au moyen de roues. Selon un aspect préférentiel de l'invention, le véhicule 1 peut être un robot apte à se déplacer de manière autonome.

Le véhicule 1 comprend un châssis 10 et un ensemble moteur roue 12. Le châssis 10 est relié à l'ensemble moteur roue 12 qui comprend une roue motrice 120 et un moteur électrique 122. Le moteur électrique 122 est piloté par un contrôleur (non représenté) délivrant au moteur un signal électrique adapté pour une consigne de vitesse donnée. Dans cet exemple de réalisation, l'ensemble moteur roue 12 est un ensemble qui comprend le moteur électrique 122 incorporé directement dans la roue motrice 120, lequel est capable de propulser le véhicule 1. Les principaux avantages d'un tel ensemble moteur roue 12 sont son encombrement réduit et le fait qu'il ne nécessite pas de transmission entre le moteur électrique 122 et la roue motrice 120. La roue motrice 120 est alors entraînée en rotation directement par le moteur électrique 120 selon un axe de rotation A1.

En variante, le moteur électrique 122 est au niveau d'un arbre entrainé par la roue motrice 120. Le fait de dissocier le moteur électrique 122 de la roue motrice 120 présente l'avantage de permettre au moteur électrique 122 d'entraîner plusieurs roues motrices par le biais de l'arbre d'entraînement.

Le véhicule 1 comprend également un dispositif de détection de survitesse 2 de la roue motrice 120. Le dispositif de détection de survitesse 2 est configuré pour détecter lorsque le véhicule 1 est en situation de survitesse dans sa zone de déplacement. Pour ce faire, le dispositif de détection de survitesse 2 comprend un premier capteur de survitesse 20 placé au niveau de la roue motrice 120. Plus précisément, le premier capteur de survitesse 20 comprend un élément fixe 20' positionné dans la roue motrice 120, ou à proximité de son axe de rotation A1, et un ou plusieurs éléments mobiles 20" positionnés selon une extrémité radiale de la roue mobile 120 par rapport à l'axe de rotation A1. L'élément fixe 20' est disposé de sorte à être immobile dans la roue motrice 120 et permet d'avoir une mesure de référence pour la rotation de la roue motrice 120. En variante, l'élément mobile 20" est fixé aléatoirement contre la roue motrice 120.

Plus précisément, lorsque l'élément mobile 20" subit une rotation complète par rapport à l'élément fixe 20' traduisant une rotation complète de la roue motrice 120 sur elle-même, le capteur de survitesse 20 détecte alors cette rotation complète en basculant d'un état incomplet à un état complet. L'état incomplet du capteur de survitesse 20 traduit donc une rotation non complète de la roue motrice 120 et de l'élément mobile 20" alors que l'état complet traduit une rotation complète, c'est-à-dire à 360°, de la roue motrice 120 et de l'élément mobile 20". A la suite d'une bascule dans l'état complet, le premier capteur de survitesse 20 bascule à nouveau dans l'état incomplet jusqu'à détecter une nouvelle rotation complète de la roue motrice 120. Le premier capteur de survitesse 20 est alors configuré pour mesurer une vitesse de rotation de la roue motrice 120. L'élément fixe 20' du premier capteur de survitesse 20 est positionné par rapport à un référentiel défini, par exemple à proximité de l'extrémité de la roue motrice 120 selon un angle connu. Dès lors, il est possible pour le capteur de survitesse 20 de mesurer un angle de rotation de la roue motrice 120 pendant la rotation de la roue motrice 120 ou encore un angle de rotation de l'élément mobile 20" par rapport à l'élément fixe 20' du capteur de survitesse 20. En variante, le référentiel peut être un point quelconque comme le point de contact entre la roue motrice 120 et l'interface sur laquelle se déplace la roue motrice 120.

L'élément fixe 20' et le ou les éléments mobiles 20" sont préférentiellement disposés de sorte à être à une faible distance l'un de l'autre afin d'améliorer la détection du premier capteur de survitesse. Et, selon une variante idéale, le ou les éléments mobiles 20" sont disposés le plus proche possible de l'élément fixe 20' sans que l'élément fixe 20' ne soit en contact avec le ou l'un des éléments mobiles 20". A titre d'exemple indicatif, l'élément fixe 20' est distant du ou des éléments mobiles d'une distance inférieure à 15 millimètres.

Dès lors, il est également possible de connaitre précisément le nombre de rotation complète que la roue motrice 120 a effectué et, en connaissant la durée pendant laquelle la roue motrice 120 est en mouvement, il est également possible pour le capteur de survitesse 20 de mesurer la vitesse de rotation de la roue motrice 120 en temps réel. Le capteur de survitesse 20 agit donc comme un capteur de position angulaire de l'élément mobile 20" par rapport à l'élément fixe 20' et par rapport au référentiel défini et comme un capteur de vitesse de rotation par l'intermédiaire de la mesure de la fréquence de bascule de l'état incomplet à l'état complet du capteur de survitesse 20.

Le dispositif de détection de survitesse 2 comprend également un dispositif de référence de vitesse 22 configuré pour établir une vitesse de rotation maximale de la roue motrice 120. Le dispositif de référence de vitesse 22 assure la fonction de sécurisation de la rotation de la roue motrice 120 et permet de définir les limites matérielles et fonctionnelles de la roue motrice 120 lorsque la roue motrice 120 est en mouvement. Pour ce faire, le dispositif de référence de vitesse 22 comprend un capteur lidar 220 configuré pour déterminer un environnement proche de la roue motrice 120. Le capteur lidar 220 est fixé au châssis 10 de sorte à être pouvoir émettre une onde lumineuse dans une direction prédéfinie de manière continue. De manière avantageuse, le capteur lidar 220 émet une onde lumineuse dans une direction de mouvement du véhicule 1 de sorte à permettre au capteur lidar 220 de détecter suffisamment rapidement tout obstacle se présentant au-devant du véhicule 1 et pouvant générer un accident.

De manière avantageuse, le dispositif de référence de vitesse 22 peut comprendre plusieurs capteurs lidars 220 orientés dans différentes directions de sorte à pouvoir effectuer une cartographie plus complète de l'environnement proche du véhicule 1.

En effet, l'environnement proche du véhicule 1 est défini comme la zone à proximité du véhicule 1 soumise aux ondes lumineuses du capteur lidar 220. L'environnement proche est donc une zone proche et accessible au véhicule 1 comprise dans la zone de déplacement du véhicule et cartographiée par le capteur lidar 220.

L'environnement proche peut également être interprété comme la zone critique du véhicule 1 dans laquelle il est possible que le véhicule 1 rencontre un obstacle pendant son mouvement et identifiable par le capteur lidar 220. La notion de proximité peut également être interprétée comme une distance entre un objet identifié par le capteur lidar 220 et le véhicule 1 assez faible pour risquer une collision. L'environnement proche dépend notamment de la vitesse de rotation de la roue motrice 120.

Dès lors, afin d'empêcher toute collision non souhaité entre le véhicule 1 et un potentiel obstacle, le dispositif de référence de vitesse 22 permet d'établir une vitesse de rotation maximale de la roue motrice 120 afin de limiter la vitesse de déplacement du véhicule lorsque l'environnement proche du véhicule 1 identifié par le capteur lidar 220 présente des obstacles susceptibles d'induire à des collisions.

La vitesse de rotation maximale de la roue motrice 120 est alors une vitesse calculée par le dispositif de référence de vitesse 22 en fonction de l'environnement proche, d'un seuil de vitesse fonctionnel prédéfini et d'un sens de rotation de la roue. Plus précisément, le seuil de vitesse fonctionnel défini la vitesse maximale à laquelle le véhicule 1 peut fonctionnellement se déplacer et remplir la fonction pour laquelle le véhicule 1 a été définie.

A titre d'exemple indicatif, lorsque le capteur lidar 220 détecte dans l'environnement proche un potentiel obstacle risquant une collision avec le véhicule, alors le dispositif de référence de vitesse 22 établit une vitesse de rotation maximale de la roue motrice 120 faible. Le dispositif de référence peut également établir une vitesse maximale de rotation de la roue motrice 120 plus faible lorsque le véhicule 1 est chargé et que le seuil de vitesse fonctionnel est plus faible.

La vitesse maximale de rotation est une vitesse indicative. En effet, la vitesse maximale de rotation doit être interprétée comme la vitesse à laquelle la roue motrice 120 doit se déplacer afin de respecter les informations liées à son environnement proche et à son fonctionnement. La vitesse maximale de rotation de la roue motrice est donc une référence de vitesse qui fluctue en temps réel en fonction des paramètres cités précédemment.

Le dispositif de détection de survitesse 2 comprend également un comparateur de vitesse 24 configuré pour comparer la vitesse de rotation de la roue motrice 120 et la vitesse de rotation maximale de la roue motrice 120 établie par le dispositif de référence de vitesse 22. Le comparateur de vitesse 24 est également configuré pour arrêter la rotation de la roue motrice 120 si la vitesse de rotation de la roue motrice 120 est supérieure à la vitesse de rotation maximale de la roue motrice 120 établie par le dispositif de référence de vitesse 22.

Ainsi, lorsque la vitesse de rotation de la roue motrice 120 est supérieure à la vitesse maximale de rotation établie par le dispositif de référence de vitesse 22, alors le véhicule 1 se déplace trop rapidement par rapport à son environnement proche et il y a un risque important d'une collision entre un obstacle identifié ou non par le capteur lidar 220 et le véhicule 1. Le comparateur de vitesse 24 agit alors directement sur le moteur électrique 122 pour freiner le moteur électrique 122 et la roue motrice 120. De manière avantageuse, le comparateur de vitesse 24 peut également agir sur le moteur électrique 122 pour arrêter la roue motrice 120. Le comparateur de vitesse 24 permet ainsi d'agir comme une sécurité contre une potentielle situation de survitesse de la roue motrice 120 et du véhicule 1 en arrêtant la rotation de la roue motrice 120.

Une telle réalisation permet avantageusement au comparateur de vitesse 24 d'assurer une fonction de sécurité en cas de survitesse, par exemple due à une défaillance du contrôleur.

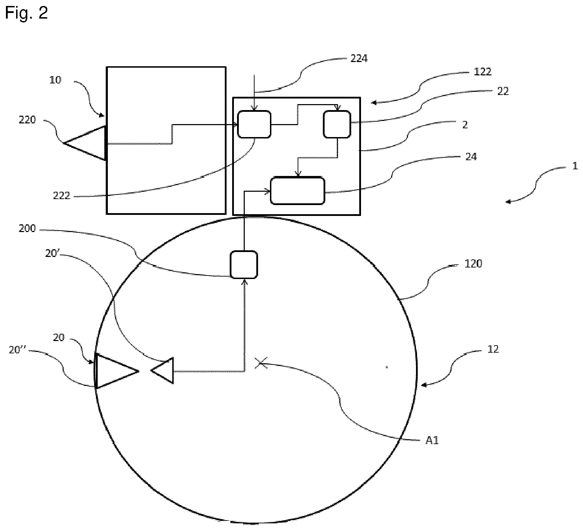

Afin de mesurer plus facilement la rotation de la roue motrice 120 et la vitesse de rotation de la roue motrice 120, le premier capteur de survitesse 20 peut comprendre un convertisseur de signal 200, comme représenté en figure 2, configuré pour convertir une fréquence de bascule du premier capteur de survitesse 20 en un signal binaire ou un signal analogique. A titre d'exemple préférentiel, le convertisseur de signal 200 est configuré pour convertir la fréquence de bascule du premier capteur de survitesse 20 en une tension analogique. Comme dit précédemment, lorsque l'élément mobile 20" subit une rotation complète par rapport à l'élément fixe 20' traduisant une rotation complète de la roue motrice 120 sur elle-même, le capteur de survitesse 20 détecte alors cette rotation complète en basculant de l'état incomplet à l'état complet. A la suite de la bascule dans l'état complet, le premier capteur de survitesse 20 bascule à nouveau dans l'état incomplet jusqu'à détecter une nouvelle rotation complète de la roue motrice 120. Afin de faciliter la détection de cette bascule traduisant une rotation complète de la roue motrice 120, il peut être ainsi envisagé de convertir cette bascule selon un signal analogique. La conversion selon le signal analogique permet ainsi de mettre en valeur une fréquence d'apparition de la bascule du capteur de survitesse 20 et donc une mesure de la vitesse de rotation de la roue motrice 120. A titre d'exemple indicatif, le convertisseur de signal 200 peut générer un signal électrique entre 0 volt et 5 volts afin de mesurer la vitesse de rotation de la roue motrice 120.

L'utilisation du dispositif de détection de survitesse 2, et plus particulièrement du premier capteur de survitesse 20, du comparateur de vitesse 24 et du convertisseur de signal 200 présente ainsi l'avantage de dissocier la gestion de la vitesse du véhicule et de la roue motrice 120 et de la gestion générale du véhicule autonome par le contrôleur. Le dispositif de détection de survitesse 2 comprend ainsi un ensemble de composants simples ou portes logiques comme le convertisseur de signal 200 fonctionnant de façon dissociée par rapport au contrôleur qui comprend des composants numériques et complexes. Le dispositif de détection de survitesse 2 est donc un système simple et fiable pour permettre la gestion de la vitesse du véhicule autonome par rapport au contrôleur numérique et faillible. La détection d'une survitesse est donc indépendante du fonctionnement du véhicule autonome et particulièrement du contrôleur numérique.

En variante, le capteur de survitesse 20 peut également être configuré pour mesurer un angle de rotation entre l'élément mobile 20" et l'élément fixe 20'. En effet, lorsque la vitesse de rotation de la roue motrice 120 est faible, la fréquence de bascule du capteur de survitesse 20 est également faible et il devient alors difficile de mesurer cette vitesse de rotation. La connaissance de cet angle de rotation permet alors de mesurer la vitesse de rotation de la roue motrice 120 sans détecter une rotation complète de la roue motrice 120. Le convertisseur de signal 200 peut également permettre de mesurer cet angle de rotation par l'intermédiaire d'un signal créneau par exemple ou de tout autre signal périodique ou encore périodique de fréquence proportionnelle à la vitesse de rotation du moteur électrique 120.

Autrement dit, le premier capteur de survitesse 20 permet de mesurer une rotation complète ou un angle de rotation de la roue motrice 120 et la vitesse de rotation de la roue motrice 120 par l'intermédiaire de la fréquence de bascule du premier capteur de survitesse 20 entre l'état incomplet et complet.

Le capteur lidar 220 est ainsi configuré pour identifier ou représenter numériquement l'environnement proche du véhicule 1 par le biais d'une première cartographie 222. Le capteur lidar 220 permet, par cette première cartographie 222, de scanner l'environnement proche et de savoir où sont les objets dans son champ de vision et à quelle distance par rapport au véhicule 1.

Il peut également être envisagé de programmer, dans le capteur lidar 220 par le biais d'une deuxième entrée de programmation 224, une zone d'attention du véhicule 1 dans la première cartographie 222. La programmation de cette zone d'attention permet à un utilisateur de définir, dans la zone de déplacement du véhicule 1, des zones dans lesquelles le véhicule 1 ne doit pas se mouvoir ou doit se mouvoir selon des vitesses restreintes. Ces zones d'attention peuvent ainsi être interprétées comme des zones critiques où une collision est fortement envisagée.

II est ainsi possible d'obtenir une première cartographie plus précise combinant le scan du capteur lidar 220 et la programmation des zones d'attention par le biais de la deuxième entrée de programmation 224 du capteur lidar 220. La programmation de la ou des zones d'attention peut également se faire en amont d'un déplacement du véhicule 1 ou pendant le déplacement du véhicule 1 dans sa zone de déplacement.

Il peut également être envisagé de remplacer le capteur lidar 220 par un autre capteur optique ou de proximité comme un sonar, un capteur ToF ou encore une caméra.

Ainsi, à partir de la première cartographie 222 complétée ou non par la deuxième entrée de programmation 224, le dispositif de référence de vitesse 22 établit la vitesse de rotation maximale de la roue motrice 120. Comme énoncé précédemment, le dispositif de référence de vitesse peut également prendre en considération d 'autres paramètres d'entrée comme les limites matérielles du véhicule 1.

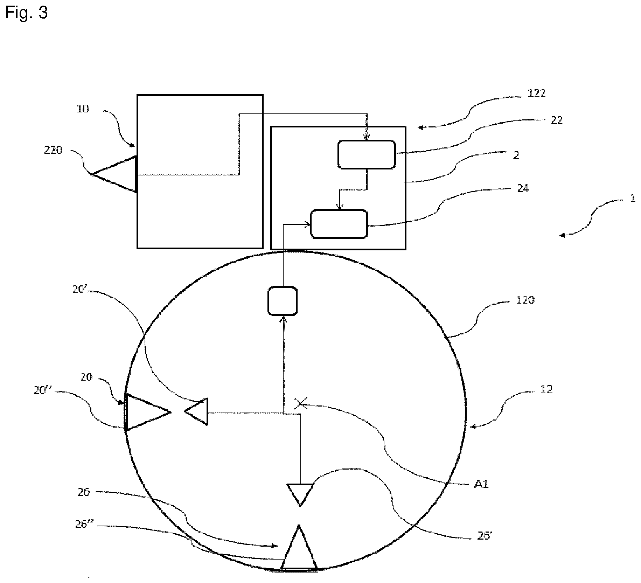

De manière avantageuse, le dispositif de détection de survitesse 2 peut comprendre un deuxième capteur de survitesse 26, comme représenté en figure 3, fixé à la roue motrice 120 et disposé selon un angle prédéfinie par rapport au premier capteur de survitesse 20. De manière similaire au premier capteur de survitesse 20, le deuxième capteur de survitesse 26 comprend un élément fixe 26' du deuxième capteur de survitesse positionné à proximité de l'axe de rotation A1 de la roue motrice 120 et un élément mobile 26" du deuxième capteur de survitesse 26 positionné selon une extrémité radiale de la roue mobile 120 par rapport à l'axe de rotation A1, l'élément mobile 26" étant disposé selon un angle prédéfini par rapport à l'élément mobile 20" du premier capteur de survitesse 20. Le deuxième capteur de survitesse 26 est configuré pour mesurer une vitesse de rotation de la roue. Autrement dit, le deuxième capteur de survitesse 26 permet de mesurer une rotation complète ou un angle de rotation de la roue motrice 120 et la vitesse de rotation de la roue motrice 120 par l'intermédiaire d'une fréquence de bascule du deuxième capteur de survitesse 26 entre l'état incomplet et complet.

L'utilisation d'un deuxième capteur de survitesse 26 présente ainsi l'avantage d'obtenir de données liées à la rotation de la roue motrice 120 apportant une redondance vis à vis des données mesurées par le premier capteur de survitesse 20 . Le deuxième capteur de survitesse 26 présente également l'avantage de permettre de mesurer une vitesse de rotation de la roue sans nécessiter de rotation complète de la roue motrice 120.

En effet, le véhicule 1 se déplace généralement à des vitesses relativement faibles, inférieures à trois kilomètres par heure. Dès lors, le temps nécessaire pour obtenir une première donnée quantifiable de la vitesse de rotation de la roue motrice 120 peut généralement nécessiter un délai relativement long. Or, pendant ce délai de mesure de la vitesse de rotation, l'environnement proche du véhicule 1 peut facilement changer et un obstacle dans l'environnement proche peut apparaitre au-devant du véhicule, transformant une situation de fonctionnement nominal du véhicule 1 en une potentielle situation de collision dangereuse. L'utilisation d'un deuxième capteur de survitesse 26 selon un angle prédéfinie par rapport au premier capteur de survitesse 20 permet ainsi de limiter la durée nécessaire pour la mesure de la rotation de la roue motrice 120 et de sa vitesse de rotation puisque cette mesure est données lorsque l'angle entre le premier capteur de survitesse 20 et le deuxième capteur de survitesse 26 est complété.

Afin de permettre la mesure la plus précise possible de la vitesse de rotation de la roue motrice 120, le dispositif de détection de survitesse 2 peut comprendre un troisième capteur de survitesse 28 également fixé à la roue motrice 120 et disposé selon un angle prédéfinie par rapport au premier capteur de survitesse 20 et par rapport au deuxième capteur de survitesse 26. De manière similaire au premier capteur de survitesse 20 et au deuxième capteur de survitesse 26, le troisième capteur de survitesse 28 comprend un élément fixe 28' du troisième capteur de survitesse 28 positionné à proximité de l'axe de rotation A1 de la roue motrice 120 et un élément mobile 28" du troisième capteur de survitesse 28 positionné selon une extrémité radiale de la roue mobile 120 par rapport à l'axe de rotation A1, l'élément mobile 28" du troisième capteur de survitesse 28 étant disposé selon un angle prédéfini par rapport à l'élément mobile 20" du premier capteur de survitesse 20 et par rapport à l'élément mobile 26" du deuxième capteur de survitesse 26. Le troisième capteur de survitesse est également configuré pour mesurer une vitesse de rotation de la roue motrice 120. Autrement dit, le troisième capteur de survitesse 28 permet de mesurer une rotation complète ou un angle de rotation de la roue motrice 120 et la vitesse de rotation de la roue motrice 120 par l'intermédiaire d'une fréquence de bascule du troisième capteur de survitesse 28 entre l'état incomplet et complet.

L'utilisation de trois capteurs de survitesse 20, 26 et 28 présente ainsi l'avantage de permettre une répartition angulaire uniforme dans la roue motrice 120 sans encombrer l'ensemble moteur roue 12. En outre, si un capteur de survitesse parmi le premier capteur de survitesse 20, le deuxième capteur de survitesse 26 ou le troisième capteur de survitesse 28 ne fonctionne pas correctement, le dispositif de détection de survitesse 2 ne s'en trouve pas impacté dans sa mesure de la vitesse de rotation de la roue motrice 120. La multiplication de capteurs de survitesse permet également de répondre à une exigence de redondance en termes de sécurité.

Selon une variante préférentielle, il peut être envisagé que le premier capteur de survitesse 20, le deuxième capteur de survitesse 26 et le troisième capteur de survitesse 28 partagent un même et unique élément fixe, à savoir par exemple l'élément fixe 20' du premier capteur de survitesse 20 et comprennent chacun un nombre prédéfini d'éléments mobiles, de sorte que le dispositif de détection de survitesse 2 comprenne une somme prédéfinies d'éléments mobiles répartis uniformément sur la roue motrice 120. A titre d'exemple indicatif, chaque capteur de survitesse peut comprendre dix éléments mobiles de sorte que le dispositif de détection de survitesse 2 comprenne trente éléments mobiles répartis uniformément sur la roue motrice 120

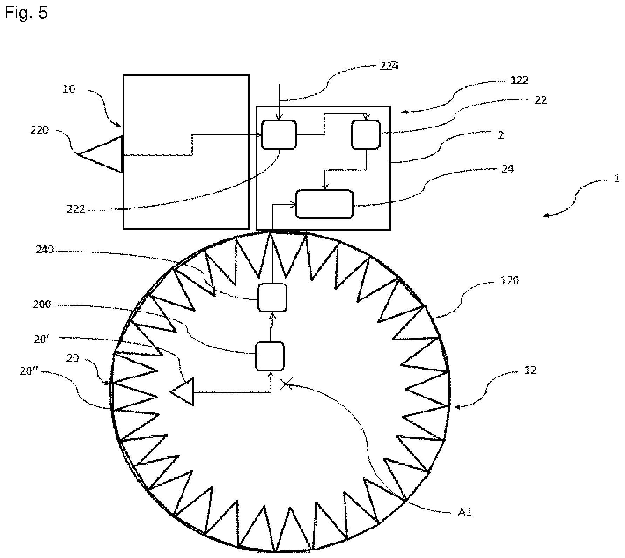

En variante idéale, un seul capteur de survitesse, par exemple le premier capteur de survitesse 20, peut être le seul capteur de survitesse compris dans le dispositif de détection de survitesse 2 et le premier capteur de survitesse peut comprendre trente éléments mobiles répartis sur la roue motrice 120 comme représenté en figure 5.

Dès lors, le convertisseur de signal 200, qui doit traiter des signaux lents, est ainsi capable transcrire selon un signal analogique un nombre prédéfini, à savoir selon notre exemple trente, de bascules entre l'état complet et l'état incomplet pendant une rotation complète de la roue motrice. En effet, le premier capteur de survitesse 20 change d'état entre l'état incomplet et l'état complet tous les douze degrés.

La multiplication du nombre d'élément mobile 20" et donc du nombre de bascule du premier capteur de survitesse 20 entre l'état incomplet et l'état complet présente ainsi l'avantage d'améliorer la réaction du dispositif de détection de survitesse, comme dis précédemment. En effet, la roue motrice tournant à une vitesse de rotation relativement faible et le fait qu'aucune réduction entre le moteur électrique 122 et la roue motrice 120 ne soit installé, les bascules entre l'état complet et l'état incomplet du premier capteur de survitesse se font, grâce à l'utilisation de trente éléments mobiles, à une fréquence de 7.8Hz à un kilomètre par heure par exemple, et donc selon une période de 128 millisecondes. Or il est nécessaire pour le dispositif de détection de survitesse d'avoir un temps de réaction rapide, c'est-à-dire inférieur à 300 millisecondes, ce qui est avantageusement le cas lorsque le premier capteur de survitesse 20 comprend trente éléments mobile 20".

Il peut également être envisagé d'ajouter un filtre 240 dans le premier capteur de survitesse 20 en sortie du convertisseur de signal 200. Le filtre 240 est disposé entre le convertisseur de signal 200 et le comparateur de vitesse 24. Le filtre en sortie de convertisseur de signal 200 doit être dimensionné pour pouvoir produire une tension suffisamment lisse pour que le comparateur de vitesse 24 puisse effectuer une comparaison tout en impactant le moins possible le temps lié à la fourniture de la mesure de vitesse de la roue motrice 120 et à la comparaison entre la mesure de la vitesse de rotation de la roue motrice 120 et la vitesse de rotation maximale de la roue motrice 120 autorisée.

Selon une configuration préférentielle, le filtre 240 est un filtre de troisième ordre.

A titre d'exemple indicatif, le filtre 240 peut être un filtre composé d'un filtre passe bas RC, composé d'une résistance et d'un condensateur, de 1er ordre cascadé avec un filtre actif de sallen key. En variante, le filtre sallen key peut être remplacé par deux filtres passe bas RC de 1 er ordre ou par un filtre passif du 2nd ordre LC, composé d'une bobine et d'un condensateur, par exemple.

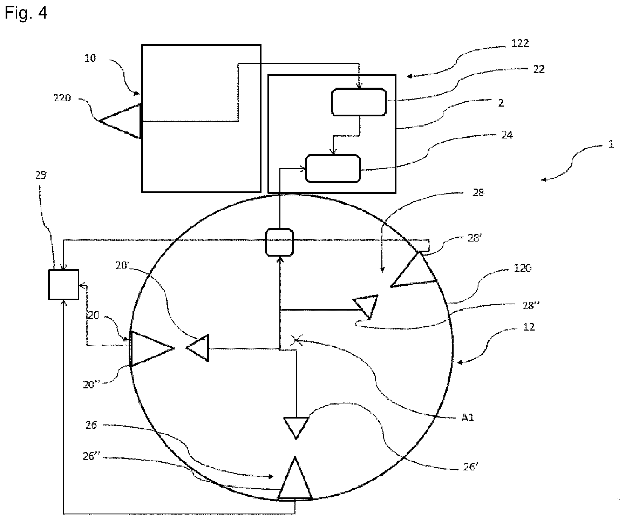

Le dispositif de détection de survitesse 2 peut également comprendre un détecteur de défaut de fonctionnement généralisé 29 du premier capteur de survitesse 20, du deuxième capteur de survitesse 26 et du troisième capteur de survitesse 28, comme représenté en figure 4, destiné à détecter un défaut de fonctionnement simultanée du premier capteur de survitesse 20 et du deuxième capteur de survitesse 26 ou du deuxième capteur de survitesse 26 et du troisième capteur de survitesse 28 ou du premier capteur de survitesse 20 et du troisième capteur de survitesse 28 ou encore du premier capteur de survitesse 20, du deuxième capteur de survitesse 26 et du troisième capteur de survitesse 28.

Ainsi, lorsque le détecteur de défaut de fonctionnement généralisé 29 détecte que deux capteurs de survitesse ne fonctionnent pas correctement alors le détecteur de défaut de fonctionnement généralisé informe l'utilisateur d'un fonctionnement dégradé du dispositif de détection de survitesse 2. Et lorsque le détecteur de défaut de fonctionnement généralisé 29 détecte que les trois capteurs de survitesse 20, 26 et 28 ne fonctionnent pas correctement alors le détecteur de défaut de fonctionnement généralisé informe l'utilisateur d'un disfonctionnement du dispositif de détection de survitesse 2.

En outre, le premier capteur de survitesse 20, le deuxième capteur de survitesse 26 et/ou le troisième capteur de survitesse 28 peuvent être des capteurs à effet hall. Ces capteurs présentent une architecture simple et sont très facilement incorporables dans l'ensemble moteur roue 12.

A titre d'exemple indicatif, chaque capteur de survitesse délivrant un signal binaire, il est possible pour le détecteur de défaut de fonctionnement généralisé 29 de générer une détection simultanée de l'état de chaque capteur de survitesse parmi le premier capteur de survitesse 20, le deuxième capteur de survitesse 26 et le troisième capteur de survitesse 28. Et, lorsque le premier capteur de survitesse 20, le deuxième capteur de survitesse 26 et le troisième capteur de survitesse 28 affichent le même état de manière simultanée alors le détecteur de défaut de fonctionnement généralisé informe l'utilisateur d'un disfonctionnement du dispositif de détection de survitesse 2. Le détecteur de défaut de fonctionnement généralisé 29 permet ainsi de prévenir d'une défaillance de cause commune qui induit à la perte de la totalité de la fonction de surveillance de la survitesse du véhicule 1. Plus précisément, selon une configuration avec trois capteurs de survitesse 20, 26 et 28 à effet halls, les signaux de chacun des premier, deuxième et troisième capteurs de survitesse à effet hall sont déphasés pour connaître approximativement la position angulaire du moteur électrique 122. Chaque capteur de survitesse à effet hall parmi le premier, le deuxième et le troisième capteur de survitesse, peut donner un signal binaire, ce qui comptabilise huit combinaisons possibles. Or, seulement six combinaisons de signaux sont possibles pour un arrangement souhaité des premier, deuxième et troisième capteurs de survitesse à effet hall. Dès lors, le détecteur de défaut de fonctionnement généralisé 29 permet de déterminer si l'une des deux combinaisons « impossibles » est obtenues et traduit le défaut d'un capteur de survitesse parmi le premier capteur de survitesse 20, le deuxième capteur de survitesse 26 ou le troisième capteur de survitesse 28.

En variante, le premier capteur de survitesse 20, le deuxième capteur de survitesse 26 et/ou le troisième capteur de survitesse 28 peuvent être des capteurs rotatifs ou des capteurs optiques.

De manière avantageuse, l'invention fonctionne pour un moteur électrique 10 communément appelé dans la littérature anglosaxonne : « in wheel », c'est-à-dire un moteur directement relié à une roue motrice entraînée elle-même pas le moteur électrique 122. Néanmoins, il peut aisément être envisagé par l'Homme du métier d'ajouter un organe intermédiaire pour, par exemple modifier la force et/ou le couple généré par le moteur électrique comme un réducteur par exemple. Un véhicule 1 peut comprenant ce type d'ensemble moteur roue 12 et de dispositif de détection de survitesse 2 peut être un véhicule autonome comme par exemple un robot ou un robot de livraison autonome ou encore un véhicule télécommandé à distance comme un robot de livraison commandé.

L'invention présente ainsi l'avantage de permettre de détecter une survitesse de la part du véhicule mobile autonome pendant son déplacement dans sa zone de déplacement en fonction de son environnement proche par l'utilisation couplée d'un capteur positionné directement dans la roue motrice et d'un capteur sensoriel de type lidar permettant d'arrêter le véhicule 1 lorsque la situation semble critique.

## Revendications

1. Véhicule (1) configuré pour se mouvoir dans une zone de déplacement, le véhicule comprenant un châssis (10) et un ensemble moteur roue (12) comprenant au moins une roue motrice (120) et un moteur électrique (122) entrainant en rotation la roue motrice (120), le véhicule (1) comprenant un dispositif de détection de survitesse (2) de la roue motrice (120), le dispositif de détection de survitesse (2) comprenant un premier capteur de survitesse (20), le premier capteur de survitesse (20) étant configuré pour mesurer une vitesse de rotation de la roue motrice (120),
le dispositif de détection de survitesse (2) comprenant un dispositif de référence de vitesse (22) configuré pour établir une vitesse de rotation maximale de la roue motrice (120), le dispositif de référence de vitesse (22) comprenant un capteur optique (220) configuré pour déterminer un environnement proche de la roue motrice (120), le capteur optique (220) étant disposé contre le châssis (10), la vitesse de rotation maximale étant au moins fonction de l'environnement proche, d'un seuil de vitesse fonctionnel prédéfini et d'un sens de rotation de la roue motrice (120),
le dispositif de détection de survitesse (2) comprenant un comparateur de vitesse (24) entre la vitesse de rotation de la roue motrice (120) et la vitesse de rotation maximale de la roue motrice (120), le comparateur de vitesse (24) étant configuré pour arrêter la rotation de la roue motrice (120) si la vitesse de rotation de la roue motrice (120) est supérieure à la vitesse de rotation maximale de la roue motrice (120),
le premier capteur de survitesse (20) comprenant un convertisseur de signal (200) configuré pour convertir une fréquence de bascule du premier capteur de survitesse (20) en une tension analogique.

2. Véhicule (1) selon la revendication 1, dans lequel le premier capteur de survitesse (20) comprend un élément fixe (20') positionné dans de la roue motrice (120) et au moins un élément mobile (20") positionné selon une extrémité radiale de la roue mobile (120) par rapport à l'axe de rotation.

3. Véhicule (1) selon la revendication 1 ou 2, dans lequel le premier capteur de survitesse (20) comprend un filtre (240) disposé entre le convertisseur de signal (200) et le comparateur de vitesse (24).

4. Véhicule selon l'une des revendications 1 à 3, dans lequel le capteur optique (220) est un capteur lidar.

5. Véhicule (1) selon la revendication 4, le capteur lidar (220) étant configuré pour générer une première cartographie (222) de l'environnement proche, le capteur lidar (220) comprenant une deuxième entrée de programmation (224) configuré pour programmer une zone d'attention du véhicule (1) dans la zone de déplacement.

6. Véhicule (1) selon l'une des revendications 1 à 5, dans lequel le dispositif de détection de survitesse (2) comprend un deuxième capteur de survitesse (26) et disposé selon un angle prédéfinie par rapport au premier capteur de survitesse (20), le deuxième capteur de survitesse (26) étant configuré pour mesurer une vitesse de rotation de la roue motrice (120).

7. Véhicule (1) selon la revendication 6, dans lequel le premier capteur de survitesse (20) et le deuxième capteur de survitesse (26) sont des capteurs effet hall ou des capteurs rotatifs ou des capteurs optiques.

8. Véhicule (1) selon l'une des revendications précédentes, dans lequel le dispositif de détection de survitesse (2) comprend un troisième capteur de survitesse (28) et disposé selon un angle prédéfinie par rapport au premier capteur de survitesse (20) et par rapport au deuxième capteur de survitesse (26), le troisième capteur de survitesse (28) étant configuré pour mesurer une vitesse de rotation de la roue motrice (120).

9. Véhicule (1) selon l'une des revendications précédentes, dans lequel le dispositif de détection de survitesse (2) comprend un détecteur de défaut de fonctionnement généralisé (29) du premier capteur de survitesse (20), du deuxième capteur de survitesse (26) et du troisième capteur de survitesse (28), le détecteur de défaut de fonctionnement généralisé (29) étant configuré pour détecter un défaut de fonctionnement simultanée du premier capteur de survitesse (20) et du deuxième capteur de survitesse (26) ou du deuxième capteur de survitesse (26) et du troisième capteur de survitesse (28) ou du premier capteur de survitesse (20) et du troisième capteur de survitesse (28) ou encore du premier capteur de survitesse (20), du deuxième capteur de survitesse (26) et du troisième capteur de survitesse (28).

10. Véhicule (1) selon l'une des revendications précédentes, dans lequel le moteur électrique (122) est incorporé dans la roue motrice (120).
